# EUROPEAN PATENT APPLICATION

(11) **EP 2 324 982 A1**
(43) Date of publication of application: **25.05.2011**
(21) Application number: 10382303.5
(22) Date of filing: 17.11.2010
(51) Int. Cl.: B29C 45/40

(54) **Guide column with a two stage ejection mechanism of ejector plates**

(30) Priority: 20.11.2009 ES 200931028
(71) Applicant: Comercial de Utiles y Moldes, S.A., 08960 Sant Just Desvern, Barcelona (ES)
(72) Inventor: Navarra Pruna, Alberto, 08960 Sant Just Desvern (Barcelona) (ES)
(74) Representative: Carpintero Lopez, Francisco

(57) **Abstract**

The invention relates to a guide column with a double ejection mechanism of ejector plates for injection moulds, which allows sequentially moving two sets of plates, which comprises:
- a shaft (1) with a first end intended to be fixed in a fixed base plate (M) of the mould and a second end intended to be fixed in a dolly plate (N) of the mould; said shaft (1) comprising a first end segment (11), an intermediate segment and a second end segment (12),
- an assembled guide bushing which can move longitudinally on the first segment of the shaft, and in solidarity with the first set of ejector plates,
- a driving guide bushing in solidarity with a second set of ejector plates fixed to a driving ejector bar, which can move on an end of the guide bushing, and
- locking means, establishing the locking of the driving guide bushing with respect to the guide bushing during the movement of said guide bushing on the first segment of the shaft; and the locking of the guide bushing and the release of the driving guide bushing when said locking means reach the intermediate segment of the shaft, defining the limit position of the path of said guide bushing.

## Description

### Object of the Invention

The present invention relates to a guide column with a double ejection mechanism of plates acting simultaneously as a guide column for the ejector plates and as a mechanism for the movement of the two sets of ejector plates in two sequenced movements.

Four conventional guide columns are currently used in moulds, with the proposed system, 2 or all 4 of the conventional guide columns can be replaced with 2 or 4 guide columns with a double ejection mechanism.

This guide column with a double ejection mechanism of ejector plates is mainly applicable in those injection moulds which have a double set of ejector plates and which require a sequenced movement during the cycle for ejecting the part such as in a first movement the two sets of ejection plates advance simultaneously, then the lower ejector plates stop and finally only the set of upper ejector plates advances, or a sequenced movement such that in a first movement the two sets of ejector plates advance simultaneously, then the set of upper ejector plates stops and finally only the set of lower ejector plates advances, and it is also more generically applicable to any mechanism requiring a guided and sequenced movement as described.

### Background of the Invention

The use of mechanisms which allow controlling, during the phase for ejecting the part, the sequence of the movement of the ejector plates of the mould when the latter consists of two sets of plates, has long been known in the field of injection moulds.

The need to implement two sets of ejector plates in the mould is mainly determined by the characteristics of the part to be injected and by the automation required in the ejection thereof.

When the need to implement two sets of ejector plates in the mould is determined, such plates must normally be controlled by a double ejection mechanism, since the injection machine has a ejector bar so that, by means of the mechanical attachment thereof with one of the sets of ejector plates of the mould, it can be moved during the phase for ejecting the part, the other set of plates being without possible movement, the double ejection mechanism therefore allows providing movement to that second set of ejector plates.

There are on the market mainly two types of double ejection mechanisms, a first group which is characterised by being of a central type, i.e., mechanisms placed in the main shaft of the mould, in the amount of one, with considerable dimensions and normally invasive with the dolly plate or at the rear part of the fixed base plate, a second group with slightly smaller dimensions, placed in any position of the mould and in an amount of at least two.

Both groups with very diverse characteristics have as a common denominator the need to provide the ejector plates with an additional guidance system, normally consisting of four guide columns with their respective bushings in both sets of ejector plates.

The invention proposal set forth does not require an additional guidance system since it performs both functions simultaneously, consequently reducing the cost and necessary space.

### Description of the Invention

The column guide with a double ejection mechanism of plates object of the invention has particularities aimed at providing it with a double functionality, as a guide column for ejector plates and as an element for the sequenced movement of the two sets of ejector plates in an injection mould.

The guide column with a double ejection mechanism of ejector plates comprises:- a shaft having a first end intended to be fixed in a fixed base plate of an injection mould and a second end intended to be fixed in a dolly plate of the mould, said shaft comprising a first end segment, an intermediate segment and a second end segment; - a guide bushing assembled with the possibility of longitudinal movement on the first segment of the shaft, and in solidarity with the first set of ejector plates; -a driving guide bushing in solidarity with a second set of ejector plates fixed to a driving ejector bar, and assembled with the possibility of movement on an end portion of the guide bushing which extends towards the second segment of the shaft, and - locking means, associated with the guide bushing and interacting with the surface of the shaft, establishing the locking of the driving guide bushing with respect to the guide bushing during the movement of said guide bushing on the first segment of the shaft; and the locking of the guide bushing and the release of the driving guide bushing when said locking means reach the intermediate segment of the shaft which defines the limit position of the path of said guide bushing.

On the guide bushing there is assembled a retaining bushing with the possibility of relative movement between an unlocking position in which it is kept separated from the locking means, and a locking position in which said retaining bushing acts on the locking means and arranges them in a position of interaction with the intermediate segment of the shaft, in which said locking means prevent the longitudinal movement of the guide bushing with respect to said shaft.

The guide bushing additionally comprises a spring acting against the retaining bushing and tending to keep it in the locking position.

According to the invention, the driving guide bushing comprises in its inner surface a seat for receiving the locking means during the movement of the guide bushing on the first segment of the shaft.

In an embodiment of the invention, the intermediate segment of the shaft comprises a perimetric recess for retaining the locking means and a stop determining the limit position of the path of the guide bushing with respect to the first segment of the shaft; said locking means being made up of a set of balls housed in radial holes distributed circumferentially in the guide bushing and with the possibility of movement in a radial direction between a first position in which said balls contact the surface of the first segment of the shaft and project from the outer surface of the guide bushing, establishing the locking of the driving guide bushing with respect to the guide bushing during the movement of said guide bushing on said first segment of the shaft, and a second position in which said balls are partially housed in the perimetric recess of the shaft, releasing the driving guide bushing associated with the second set of ejector plates, and said balls are retained in said second position by the retaining bushing, preventing the movement of the guide bushing associated with the first set of ejector plates.

With the described means the guide column of the invention allows the driving of the two sets of ejector plates to be carried out by means of driving a bar or a set of ejector bars which act only on one set of ejector plates, as indicated below.

In an initial position, the guide bushing, associated with the first set of ejector plates, is located on the first segment of the shaft and the driving guide bushing, associated with the second set of ejector plates, is fixed to the guide bushing by means of the set of balls which, due to their contact with the surface of the first segment of the shaft, remain in a projecting position with respect to the surface of the guide bushing, being partially housed in the inner recess of the driving guide bushing.

Since the balls are housed in the respective holes of the guide bushing, and therefore their relative longitudinal movement with respect to the guide bushing is impossible, the relative movement with respect to the guide bushing of the driving guide bushing is also impossible.

Thus, when the second set of ejector plates, associated with the driving guide bushing, initiates its movement longitudinally, the first set of ejector plates moves together with them on the first segment of the shaft.

As soon as the guide bushing reaches the limit position of its path, defined by the stop existing in the intermediate area of the shaft, the balls move radially into the perimetric recess of the shaft, releasing the driving guide bushing, which continues its longitudinal movement, together with the second set of ejector plates due to the action of the ejector bar or bars. As soon as the balls are housed in the perimetric recess of the shaft and the driving guide bushing is released, the retaining bushing moves on the guide bushing due to the action of the thrust spring and it is arranged on the balls, preventing them from being released from the perimetric recess from the shaft, whereby it is assured that the guide bushing and the first set of the ejector plates cannot move longitudinally with respect to the shaft, although the driving guide bushing and the second set of ejector plates continue to move longitudinally until the end of the path thereof.

In the inverse return movement, the driving guide bushing and the second set of plates are moved by the ejector bar or bars towards the initial position. When the driving guide bushing impacts against the retaining bushing, causing its retreat and the compression of the spring which retained it in the locking position, the retreat movement of the guide bushing starts and the balls are moved out of the perimetric recess, coming into contact with the outer surface of the segment of the shaft, which forces them to move radially towards the outside and be embedded in the inner recess of the driving guide bushing, making it in solidarity with the guide bushing. After this moment, there is a joint retreat movement of the driving guide bushing and the guide bushing, and consequently of the respective sets of extracting plates associated therewith.

The mentioned locking means allow, both in the advance and in the retreat, the movement of the guide bushing to be continuous between the two end positions of the path of the second set of plates, since the connection and disconnection of the movement of the first set of extracting plates is carried out automatically during the movement of the driving guide bushing.

It should be mentioned that this guide column with a double mechanism ejection allows adjusting the desired length of the run carried out on the first segment of the shaft by simply cutting or extending the first end of said shaft.

The assembly described above allows achieving the functionality sought by the invention.

### Description of the Drawings

To complement the description which is being made and for the purpose of aiding to better understand the features of the invention set forth, the figures as detailed below are attached as an integral part of said description, with an illustrative and non-limiting character:

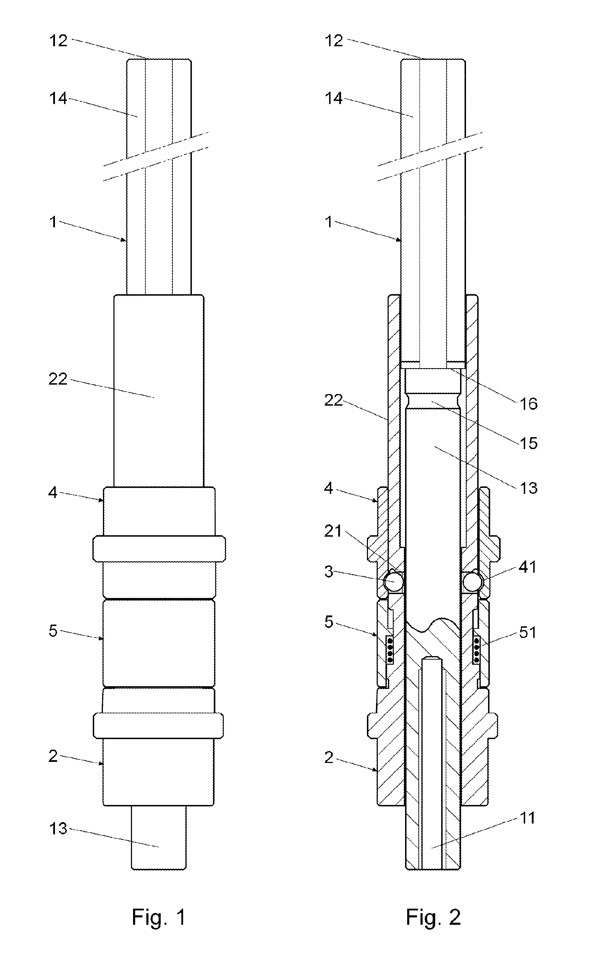

- Figure 1 shows an elevational view of an embodiment of the guide with a double ejection mechanism of plates object of the invention.
- Figure 2 shows an elevational view the guide with a double ejection of the previous figure, sectioned through a vertical plane.

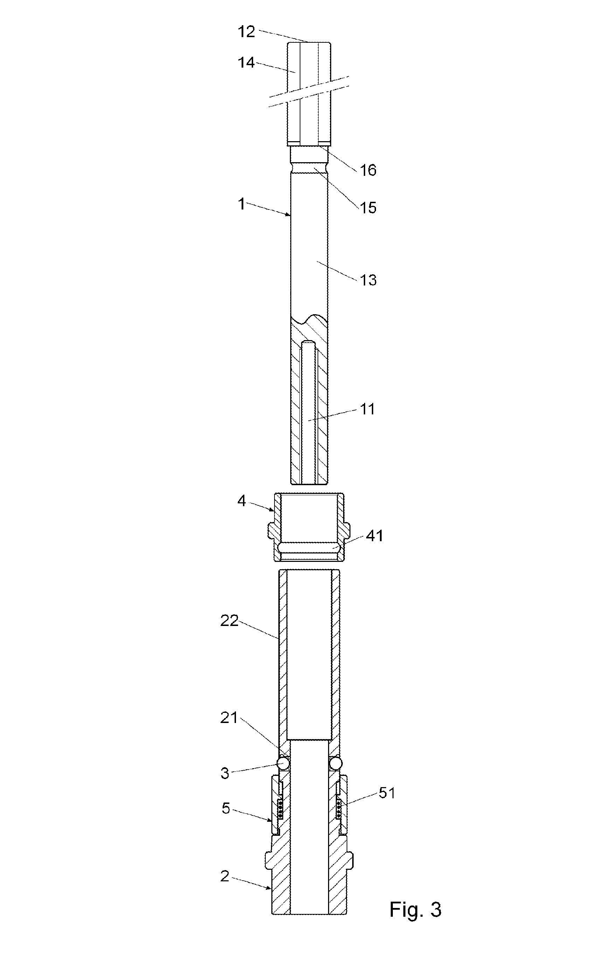

- Figure 3 shows an elevational view of the guide bushing and the driving guide bushing sectioned through a vertical plane and disassembled from the shaft.
- Figures 4, 5 and 6 show respective views of the guide with a double ejection mechanism sectioned through a vertical plane and applied in an injection mould with a double set of ejector plates, said sets of ejector plates having been depicted respectively: in the initial joint movement phase on the initial segment of the shaft, in an intermediate phase in which the advance of the first set of ejector plates is stopped, and in a final movement phase in which the second set of ejector plates reach the end point of the path thereof.

### Preferred Embodiment of the Invention

In the embodiment shown in the attached figures, the guide column with a double ejection mechanism of ejector plates comprises a shaft (1) having a first end with an inner thread (11) for its fixing in the fixed plate (M) of an injection mould and a second end (12) for its fixing in the dolly plate (N) of the mould.

The shaft (1) has a first segment (13), a second segment (14) and an intermediate segment in which there are defined a perimetric recess (15) and a stop (16) for the movement of the guide bushing (2) along the first segment (13) of the shaft (1).

In the example shown, the second segment (14) of the shaft externally has a plane (not referenced) for its coupling, without the possibility of rotation, with the dolly plate (N) of the mould.

The mentioned guide bushing (2) has an end portion (22) on which a driving guide bushing (4) associated with a second set of ejector plates (Q) is assembled with the possibility of longitudinal movement.

Said guide bushing (2) is in solidarity with a first set of ejector plates (P) and has radial holes (21) in which a set of balls (3) is housed, which balls, according to the position of the guide bushing (2), interact with the surfaces defined by the first segment (13) and by the perimetric recess (15) of the shaft (1).

On the guide bushing (2) there is assembled a retaining bushing (5) which can move between an unlocking position in which it is kept separated from the balls (3) and a locking position in which said retaining bushing (5) acts on the balls (3) and keeps them housed in the recess (15) of the shaft (1).

A spring (51) acts on said retaining bushing (51), which spring tends to keep it in the mentioned locking position.

As can be observed in the attached figures, the second set of ejector plates (Q) is fixed to an ejector bar (B) in charge of causing the longitudinal movement thereof between two end positions.

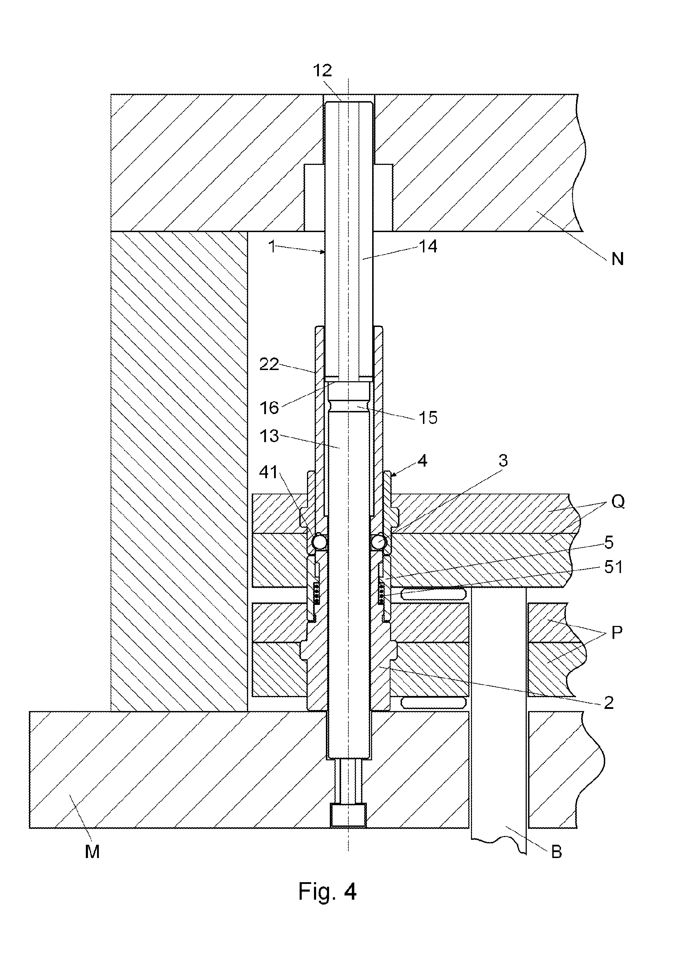

As can be observed in Figure 4, when the second set of ejector plates (Q) is in initial position of its path, the bushing (2) is located on the first segment (13) of the shaft (1) and the balls (3) are kept in a projecting position and partially housed in a seat (41) defined for that purpose inside the driving guide bushing (4); such that said driving guide bushing (4) cannot move longitudinally with respect to the guide bushing (2). Thus, when the second set of ejector plates (Q) moves due to the action of the ejector bar (B), the driving guide bushing (4) causes the joint movement of the guide bushing (1) and the first set of ejector plates (P) on the first segment (13) of the shaft (1).

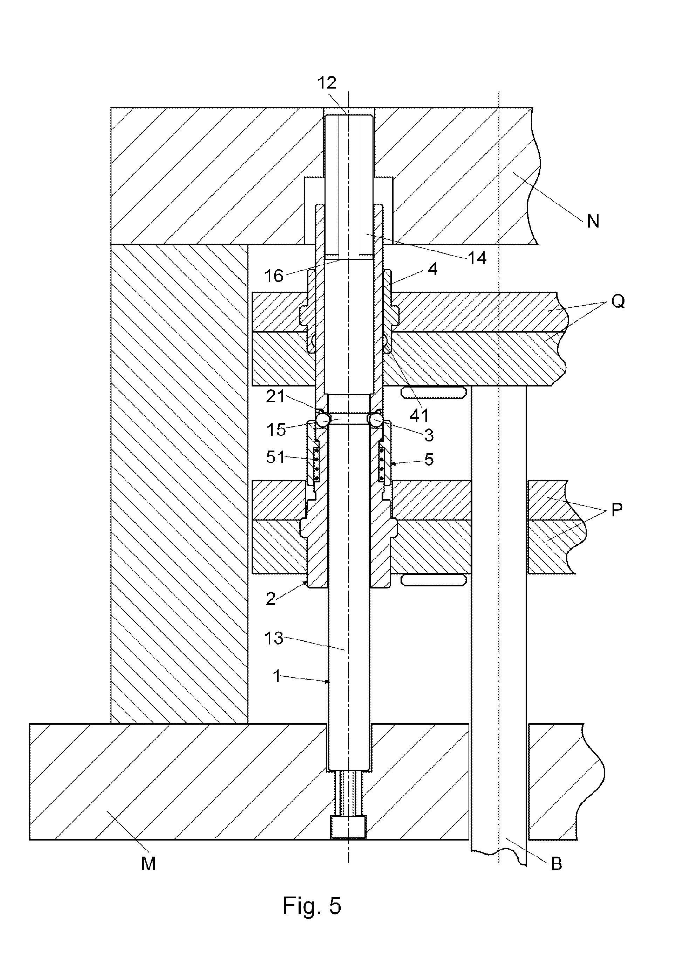

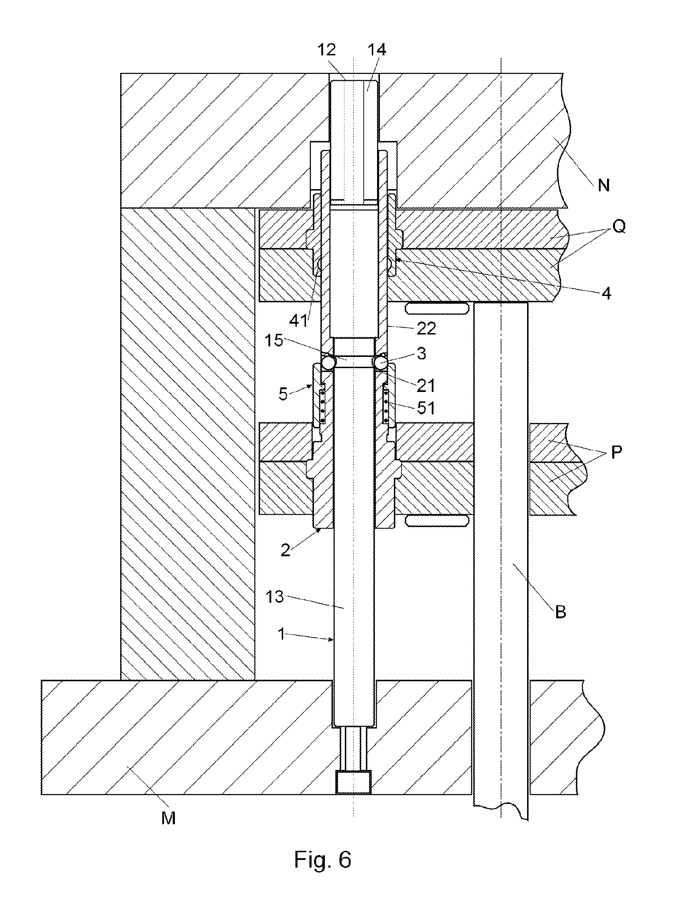

When the guide bushing (2) contacts the stop (16) of the shaft (1) and reaches the limit position of its path, as shown in Figure 5, the balls (3) are housed in the perimetric recess (15) of the shaft (1), releasing the driving guide bushing (4) which continues to move on the end portion (22) of the bushing (2), together with the second set of ejector plates (Q), until reaching the end position of its path, depicted in Figure 6.

As soon as the balls (3) face the perimetric recess (15), the retaining bushing (5) moves due to the action of the spring (51) towards a locking a position in which it is positioned on the balls (3), retaining them inside the perimetric recess (15), preventing the longitudinal movement of the guide bushing (2) and of the first set of ejector plates (P) associated therewith.

The guide column with a double ejection mechanism of ejector plates object of the invention allows, by acting only on the second set of ejector plates (Q), the first set of ejector plates (P) to move together with the latter up to a determined point, acting individually thereof, and the second set of ejector plates (Q) to continue moving until the end of its path, after the first set of ejector plates (P) has stopped.

Having sufficiently described the nature of the invention as well as a preferred embodiment, it is stated for the relevant purposes that the materials, shape, size and arrangement of the described elements can be modified, provided that this does not involve an alteration of the essential features of the invention which are claimed below.

## Claims

1. Guide column with a double ejection mechanism of ejector plates, **characterised in that** it comprises:
- a shaft (1) with a first end intended to be fixed in a fixed base plate (M) of the mould and a second end intended to be fixed in a dolly plate (N) of the mould; said shaft (1) comprising a first end segment (11), an intermediate segment and a second end segment (12),
- a guide bushing assembled with the possibility of longitudinal movement on the first segment of the shaft, and in solidarity with a first set of ejector plates,
- a driving guide bushing in solidarity with a second set of ejector plates fixed to a driving ejector bar, and assembled with the possibility of movement on an end portion of the guide bushing which extends towards the second segment of the shaft,
- locking means associated with the guide bushing and interacting with the surface of the shaft, establishing the locking of the driving guide bushing with respect to the guide bushing during the movement of said guide bushing on the first segment of the shaft, and the locking of the guide bushing and the release of the driving guide bushing when said locking means reach the intermediate segment of the shaft which defines the limit position of the path of said guide bushing.

2. Guide column with a double ejection mechanism of ejector plates according to claim 1, **characterised in that** on the guide bushing there is assembled a retaining bushing with the possibility of relative movement between an unlocking position in which it is kept separated from the locking means and a locking position in which said retaining bushing acts on the locking means and arranges them in a position of interaction with the intermediate segment of the shaft, in which said locking means prevent the longitudinal movement of the guide bushing with respect to said shaft.

3. Guide column with a double ejection mechanism of ejector plates according to claim 2, **characterised in that** the guide bushing comprises a spring acting against the retaining bushing and tending to keep it in the locking position.

4. Guide column with a double ejection mechanism of ejector plates according to any of the previous claims, **characterised in that** the driving guide bushing comprises in its inner surface a seat for receiving the locking means during the movement of the guide bushing on the first segment of the shaft.

5. Guide column with a double ejection mechanism of ejector plates according to any of the previous claims, **characterised in that** the intermediate segment of the shaft comprises a perimetric recess for retaining the locking methods and a stop determining the limit position of the path of the guide bushing with respect to the first segment of the shaft.

6. Guide column with a double ejection mechanism of ejector plates according to any of the previous claims, **characterised in that** the locking means are made up of a set of balls housed in radial holes distributed circumferentially in the guide bushing and with the possibility of movement in a radial direction between a first position in which said balls contact the surface of the first segment of the shaft and project from the outer surface of the guide bushing, establishing the locking of the driving guide bushing with respect to the guide bushing during the movement of said guide bushing on said first segment of the shaft, and a second position in which said balls are partially housed in the perimetric recess of the shaft, releasing the driving guide bushing associated with the second set of ejector plates, and said balls are retained in said second position by the retaining bushing, preventing the longitudinal movement of the guide bushing associated with the first set of ejector plates.
